# EUROPEAN PATENT SPECIFICATION

(11) **EP 4 345 431 B1**
(45) Date of publication and mention of the grant of the patent: **28.01.2026**
(21) Application number: 23177279.9
(22) Date of filing: 05.06.2023
(51) Int. Cl.: G01K 1/14, G01K 11/32

(54) **METHOD AND SYSTEM FOR DETERMINING A MEASURED TEMPERATURE OF A MULTI-CELL ELECTROLYZER**
VERFAHREN UND SYSTEM ZUR BESTIMMUNG EINER MESSTEMPERATUR EINES MEHRZELLIGEN ELEKTROLYSEURS
PROCÉDÉ ET SYSTÈME DE DÉTERMINATION D'UNE TEMPÉRATURE MESURÉE D'UN ÉLECTROLYSEUR MULTICELLULAIRE

(43) Date of publication of application: 03.04.2024
(73) Proprietor: Yokogawa Electric Corporation, Musashino-shi, Tokyo 180-8750 (JP)
(72) Inventor: KRAMER, Martijn, 3825 HD Amersfoort (NL); KREUNING, Paul, 3825 HD Amersfoort (NL)
(74) Representative: Zimmermann, Tankred Klaus

(56) References cited:
- CN-A- 115 305 502
- CN-B- 106 917 109
- DE-A1- 102009 024 657
- US-A1- 2005 213 867

## Description

### Field

Examples relate to a method, apparatus, and computer program for determining a measured temperature of a multi-cell electrolyzer, and to a system comprising such an apparatus and a fiber-optic temperature sensor.

### Background

US 2005/213867 A1 describes an optical system designed to monitor and measure the temperature of battery assemblies. Utilizing optical temperature sensors, specifically Bragg grating structures etched onto optical fibers, the system can accurately gauge temperatures both inside and outside the battery. Aimed at improving thermal management in applications like hybrid vehicles, the system may be notable for its immunity to electrical interference, offering a reliable alternative to traditional temperature measurement methods.

CN 115 305 502 A describes a temperature control system for a multi-cell electrolyzer, where temperatures are monitored using fiber-optic sensors positioned at inlets and outlets of cells. The system collects temperature data at intervals along the fiber cable, allowing basic monitoring of electrolyte temperatures. However, CN 115 305 502 A also highlights limitations of fiber-optic measurement in corrosive environments and explores alternative temperature control solutions for electrolyzer applications.

Electrolyzers are devices that use electricity to drive an otherwise non-spontaneous chemical reaction, e.g., to split compounds, such as water, into their constituent elements through electrolysis. For example, hydrogen electrolyzers and chloralkali electrolyzers are important tools for the production of hydrogen and chlorine/sodium hydroxide, respectively. For large-scale applications, electrolyzers often use a large number of individual electrolyzer cells, which are often arranged in a horizontal stack.

The temperature in individual electrolyzer cells is an important metric, as the temperature is considered critical to the overall efficiency of the electrolyzer. In addition, the temperature may indicate individual cell issues, which may be related to a decrease in efficiency, or which may be caused by cell degradation. Further, in case of hydrogen electrolyzer cells, due to leakage, external flameless fire may occur, which is difficult to detect.

Measuring temperature by conventional means has a number of limitations. For example, measuring inside or outside the cell is very difficult due to the corrosive environment and strong electrical and magnetic fields. Moreover, flames can occur anywhere on the electrolyzer, such that require multiple temperature sensors for each cell may be required. The large number of temperature sensors also requires processing hardware (e.g., PLCs (Programmable Logic Controllers) and computers systems) to further process the data, making this a costly approach.

There may be a desire for an improved concept for measuring the temperature of electrolyzer cells.

### Summary

Various examples of the present disclosure are based on the finding, that the large number of measurements needed to effectively monitor a multi-cell electrolyzer can be realized using a fiber-optic temperature sensor. In fiber-optic temperature measurement, the temperature can be measured separately at many points along a long fiber-optic cable, which may extend multiple kilometers in some applications. For example, such fiber-optic temperature sensors use effects such as Raman scattering, Brillouin scattering, temperature-dependent interferometric properties, or temperature-dependent distributed optical reflection to determine temperature values, i.e., measurement values that are indicative of the temperature, at various intervals of the fiber-optic cable. These measurement values can then be used to determine at least one temperature value for each cell of the multi-cell electrolyzer. In effect, a single sensor (the fiber-optic cable and corresponding sensor), paired with post-processing of the temperature values, suffices to determine the cell-specific temperatures of the cells of the multi-cell electrolyzer. By determining at least one temperature for each individual cell, with limited effort due to the use of a fiber-optic cable as measurement probe, the above-referenced limitations may be overcome. The proposed concept applies to various types of electrolyzers, including electrolyzers with unipolar cells and electrolyzers with bipolar cells, as well as electrolyzers where the cells are arranged in a series configuration and electrolyzers where the cells are arranged in parallel, e.g., in a parallel stack.

The present invention relates to a method for determining a measured temperature of a multi-cell electrolyzer. The method comprises generating, by a fiber-optic temperature sensor, sensor information, using a fiber-optic cable arranged at cells of the multi-cell electrolyzer. The fiber-optic cable is attached to a hull or outer surface of the cells of the multi-cell electrolyzer. The method comprises obtaining the sensor information of the fiber-optic temperature sensor. The sensor information comprises temperature values measured at a plurality of intervals of the fiber-optic cable used by the fiber-optic temperature sensor. The method comprises calculating, for the individual cells of the multi-cell electrolyzer, at least one temperature of the respective cell based on the temperature values measured at the plurality of intervals. This way, the temperatures of the individual cells can be determined with low effort and low cost due to the use of a single measurement probe. Moreover, as multiple temperatures can be determined per cell, a more comprehensive monitoring of the individual cells is supported.

Using fiber-optic temperature measurement, temperature values can be determined at fixed intervals within the fiber-optic cable. These measurement can then be mapped to the individual cells of the multi-cell electrolyzer. Accordingly, the method may comprise mapping the plurality of intervals to the cells of the multi-cell electrolyzer. The method may comprise selecting, for the respective cells of the multi-cell electrolyzer, one or more temperature values based on the mapping of the plurality of intervals to the cells of the multi-cell electrolyzer. The method may comprise calculating the at least one temperature for a cell based on the one or more temperature values selected for the cell. This way, the raw measurements contained in the temperature values can first be mapped to the individual cells and then be used to calculate the respective at least one temperature for each cell.

In general, there are various options for placement of the fiber-optic cable at the cells of the multi-cell electrolyzer. According to the independent claims, the fiber-optic cable is attached to a hull or outer surface of the cells of the multi-cell electrolyzer. This enables use of the proposed method with third-party electrolyzers, as the electrolyzers do not have to be modified. Moreover, the fiber-optic cable are not subject to the corrosive conditions inside the cells. Outside the scope of the claims, the fiber-optic cable may be integrated into the cells, cell walls, heating pipes or cooling pipes of the multi-cell electrolyzer. At least integration into the cells or cell walls may require modification of the multi-cell electrolyzer, at the potential benefit of more precise measurements, and in particular smaller delay in registering changes. The use of heating or cooling pipes for integration of the fiber-optic cable presents a compromise between accuracy of the measurement and effort required for outfitting the multi-cell electrolyzer with the fiber-optic cable.

In general, the fiber-optic cable covers multiple cells of the multi-cell electrolyzer. This way, the number of fiber-optic cables required can be kept low, which decreases the cost of the system.

To take measurements at different points of the cells, which may enable a more comprehensive monitoring of the cells, e.g., for the purpose of detection of flameless fires, the fiber-optic cable may be placed in a manner that enables taking multiple separate measurements per cell. One such pattern is a circular pattern. For example, the fiber-optic cable may be arranged in a pattern encircling the respective cells successively at an outer perimeter of the cells. This facilitates the mapping between intervals of the fiber-optic cable and the cells of the multi-cell electrolyzer, as measurements at subsequent intervals often belong to the same cell. Alternatively, the fiber-optic cable may be arranged in a serpentine pattern, such that the optical cable repeatedly extends along a sequence of cells of the multi-cell electrolyzer, turns back, extends back along the sequence of cells in reverse direction, and turns back again to extend along the sequence of cells again. This also allows multiple measurements per cell, at the cost of more complex mapping between the intervals and cells.

The present invention further relates to a system for a multi-cell electrolyzer comprising an apparatus for determining a measured temperature of a multi-cell electrolyzer. The apparatus comprises interface circuitry for obtaining the sensor information of the fiber-optic temperature sensor, and processing circuitry to perform the aspects of the method that relate to processing of the sensor information. This way, the temperatures of the individual cells can be determined with low effort and low cost due to the use of a single measurement probe. Moreover, as multiple temperatures can be determined per cell, a more comprehensive monitoring of the individual cells is supported. The system further comprises the fiber-optic temperature sensor with the fiber-optic cable. The fiber-optic temperature sensor is configured to generate, using the fiber-optic cable, the sensor information, and to provide the sensor information to the apparatus. For example, the system may be used to perform the above method.

As outlined above, the fiber-optic cable is attached to a hull or outer surface of the cells of the multi-cell electrolyzer.

This option is lower effort and can be used with third-party electrolyzers.

For example, the fiber-optic cable may cover multiple cells of the multi-cell electrolyzer. This way, the number of fiber-optic cables required can be kept low, which decreases the cost of the system.

In some examples, the fiber-optic cable may be arranged in a circular pattern encircling the respective cells successively at an outer perimeter of the cells. This facilitates the mapping between intervals of the fiber-optic cable and the cells of the multi-cell electrolyzer, as measurements at subsequent intervals often belong to the same cell.

Alternatively, the fiber-optic cable may be arranged in a serpentine pattern, such that the optical cable repeatedly extends along a sequence of cells of the multi-cell electrolyzer, turns back, extends back along the sequence of cells in reverse direction, and turns back again to extend along the sequence of cells again. This also allows multiple measurements per cell, at the cost of more complex mapping between the intervals and cells.

In various examples, the fiber-optic cable may be arranged in a pattern that may comprise a sub-pattern, such as a spiral sub-pattern or zig-zag sub-pattern, that may be repeated multiple times within the pattern. Each of the sub-patterns may be arranged at one of the cells. Each cell may be covered by multiple repetitions of the sub-pattern. Using this technique, multiple measurements per cells may be performed, e.g., for generating a two-dimensional temperature map per cell.

In some examples, the system may further comprise the multi-cell electrolyzer. For example, the multi-cell electrolyzer may be a hydrogen electrolyzer or a chloralkali electrolyzer. Hydrogen electrolyzers and chloralkali electrolyzers are among the most commonly used electrolyzers.

### Brief description of the Figures

Some examples of apparatuses and/or methods will be described in the following by way of example only, and with reference to the accompanying figures, in which:
Fig. 1a shows a flow chart of an example of a method for determining a measured temperature of a multi-cell electrolyzer;
Fig. 1b shows a schematic diagram of an apparatus for determining a measured temperature of a multi-cell electrolyzer, and of a system comprising such an apparatus;
Figs. 1c and 1d show sub-patterns for use in arranging a fiber-optic cable;
Fig. 2 shows a schematic diagram of a measurement of a voltage of individual cells and of a stack current;
Fig. 3 shows a schematic diagram of an example of a measurement of a temperature of individual electrolyzer cells;
Figs. 4a and 4b show flow charts of examples of flows of measurement and processing of temperatures of cells of a multi-cell electrolyzer;
Fig. 5 shows a schematic diagram of an example of electrolyzer cells encircled by a fiber-optic cable;
Fig. 6 shows a schematic diagram of an example of electrolyzer cells with a woven fiber-optic cable; and
Fig. 7 shows a schematic diagram of an example of a data processing system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

Various examples of the present disclosure relate to a method, apparatus, and computer program for determining a measured temperature of a multi-cell electrolyzer, and to a system comprising such an apparatus and a fiber-optic temperature sensor, with the system optionally comprising an additional processing entity and/or the multi-cell electrolyzer itself.

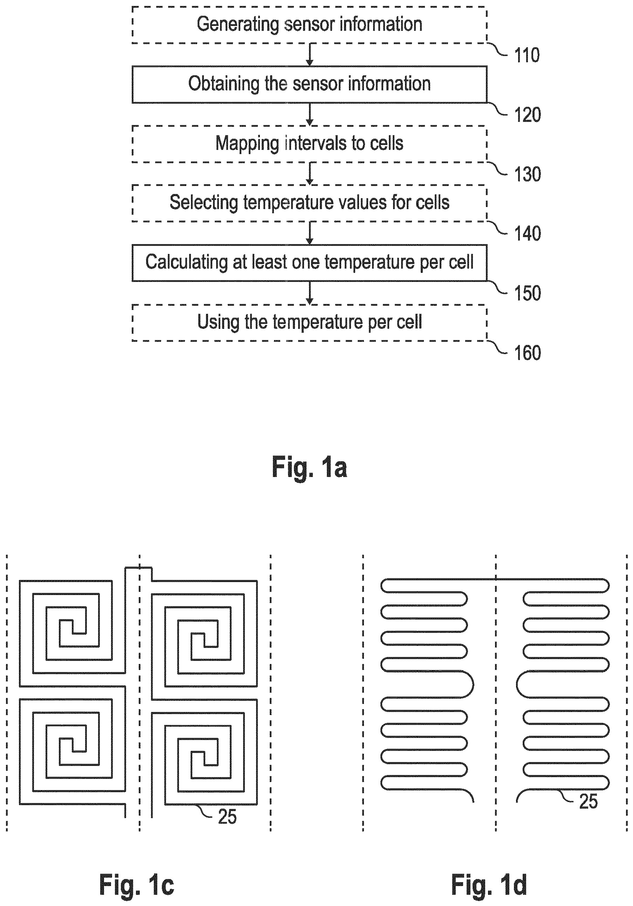

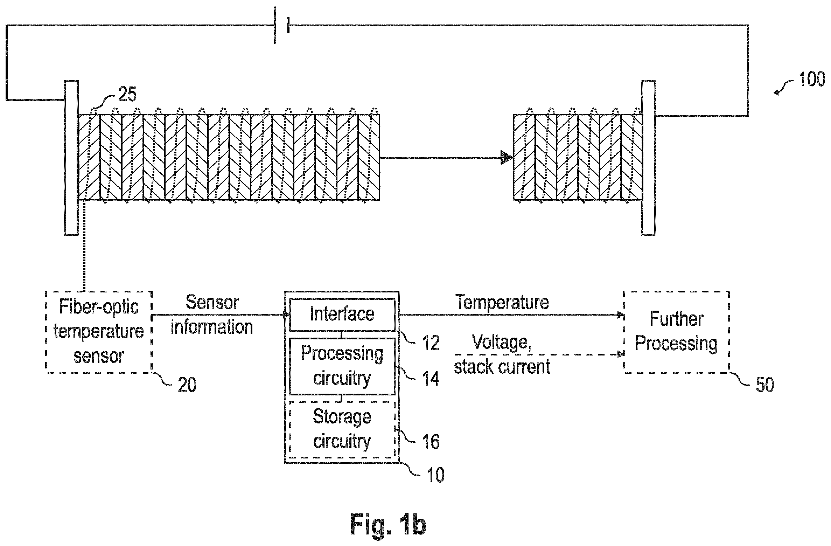

Fig. 1a shows a flow chart of an example of the method for determining the measured temperature of a multi-cell electrolyzer. The method comprises obtaining 120 sensor information of a fiber-optic temperature sensor 20 (shown in Fig. 1b). The sensor information comprises temperature values measured at a plurality of intervals of a fiber-optic cable 25 (shown in Fig. 1b) used by the fiber-optic temperature sensor. The method comprises calculating 150, for each cell of the multi-cell electrolyzer, at least one temperature based on the temperature values measured at the plurality of intervals.

In the following, a short introduction is given on the various components involved or referenced herein. Fig. 1b shows a schematic diagram of the apparatus 10 for determining the measured temperature of the multi-cell electrolyzer. The apparatus 10 comprises interface circuitry 12 for obtaining the sensor information of the fiber-optic temperature sensor 20, and processing circuitry 14 to perform at least some operations of the method of Fig. 1a. Optionally, the apparatus 10 further comprises storage circuitry 16, for temporarily or permanently storing previous measurements or a mapping. The processing circuitry 14 is coupled with the interface circuitry 12 and with the optional storage circuitry 16. The processing circuitry 14 may be configured to provide the functionality of the apparatus 10, in conjunction with the interface circuitry 12 (for exchanging information, e.g., with the fiber-optic temperature sensor and/or a processing entity 50) and/or the optional storage circuitry 16 (for storing information). For example, the apparatus 10 may provide its functionality by the processing circuitry 14 executing machine-readable instructions, which may be stored in the storage circuitry 16.

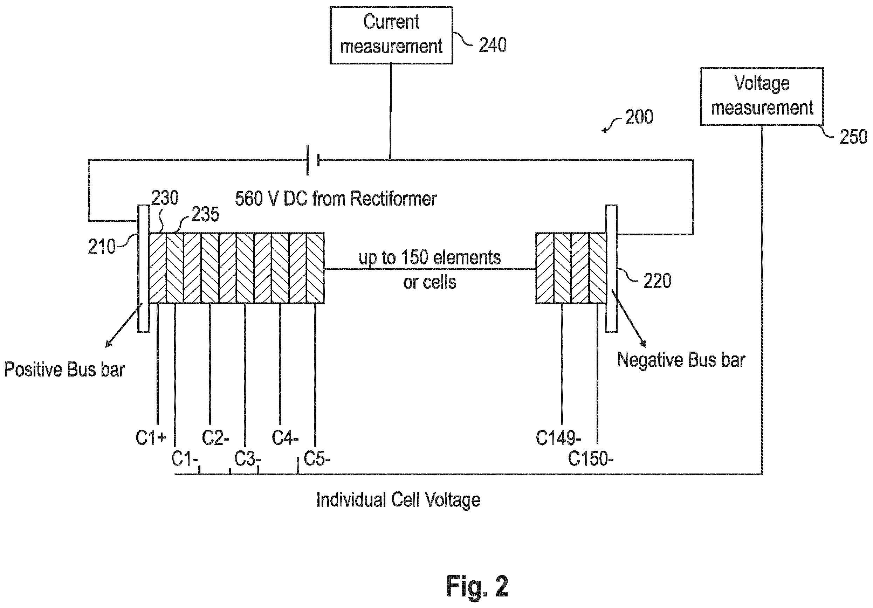

The apparatus 10 communicates with the fiber-optic temperature sensor 20, and thus optionally forms a system together with the fiber-optic temperature sensor 20. An output of the apparatus 10 (i.e., the at least one temperature calculated for each cell of the multi-cell electrolyzer), may be processed by an other processing entity 50 (in addition to sensor information on cell voltage and stack current, i.e., the current applied to the stack of cells). For example, the processing entity 50 may be implemented similar to the apparatus 10, comprising an interface, processing circuitry and optional storage circuitry. The fiber-optic temperature sensor 20 uses the fiber-optic cable 25 to generate the sensor information that is provided to the apparatus 10. Accordingly, the method may comprise generating 110, by the fiber-optic temperature sensor 20, the sensor information, using the fiber-optic cable, which may then be used to determine the cell temperatures of the individual cells. Accordingly, the fiber-optic temperature sensor 20 may be configured to generate, using the fiber-optic cable, the sensor information, and to provide the sensor information to the apparatus 10. Fig. 1b further shows the multi-cell electrolyzer 100 with its plurality of cells, and with the fiber-optic cable 25 being arranged at the cells. More details on the multi-cell electrolyzer are given in connection with Fig. 2. For example, the processing entity 50 and/or the electrolyzer 100 may be part of the system as well.

**In** Fig. 1b, four entities are distinguished - the multi-cell electrolyzer 100, the fiber-optic temperature sensor 20 with the fiber-optic cable 25, the apparatus 10 being used to process the sensor information provided by the fiber-optic temperature sensor, and the processing entity 50 being used to further process the cell temperature (and optionally the cell voltage and stack current). However, in some cases, the apparatus 10 and the processing entity 50 may be the same or part of the same device, i.e., the processing entity 50 may convert the sensor information of the fiber-optic temperature sensor to cell temperatures. Moreover, in some cases, the apparatus 10 and the fiber-optic temperature sensor 20 may be the same device or part of the same device, i.e., processing of the temperature values to determine the cell individual temperatures may be performed as part of the fiber-optic temperature sensor, or the interface circuitry 12 of the apparatus may comprise circuitry to connect to the fiber-optic cable 25, to perform the temperature measurements.

The proposed concept is based on using fiber-optic temperature measurements. In general, such fiber-optic temperature measurements are based on effects that the temperature has on the fiber-optic cable 25. For example, depending on the temperature, the reflection or scattering of light or sound may be different at different intervals of the fiber-optic cable. There are various techniques for implementing such a fiber-optic temperature sensor. For example, the fiber-optic temperature sensor may be a fiber Bragg grating sensor, i.e., a sensor that is based on sensing temperature-dependent variations in the Bragg wavelength. Alternatively, the fiber-optic temperature sensor may be a Raman-scattering-based sensor, which is based on the temperature-dependency of inelastic scattering on optical phonons. Alternatively, the fiber-optic temperature sensor may be an (intrinsic or extrinsic) interferometric fiber-optical temperature sensor, i.e., a temperature sensor that is based on a temperature-dependent change of an optical resonator length. Alternatively, the fiber-optic temperature sensor may be a Brillouin scattering-based distributed temperature sensor (which is based on the temperature-dependent scattering of acoustic phonons). However, the proposed concept is not limited to a particular implementation of a fiber-optic temperature sensor.

Fiber-optic temperature sensors have in common, that they allow measurement of temperatures at user-defined or system pre-defined intervals. For example, in an example fiber-optic temperature used for implementing the proposed concept, the fiber-optic temperature sensor provides a measurement in one-meter increments, i.e., a separate temperature value for each meter of a multiple kilometer long fiber-optic cable. In some examples, the measurements of the temperature values are taken at a specific point of each meter, while in other examples, an average temperature value is measured over a one-meter stretch or a particular stretch of fiber-optic cable. Depending on how the fiber-optic cable is arranged at the cells of the electrolyzer, these temperature values may then be used to calculate the temperatures at the individual cells. The process thus starts with obtaining 120 (and, optionally, generating 110) the sensor information with the temperature values. As outlined above, the sensor information comprises temperature values measured at a plurality of intervals of the fiber-optic cable used by the fiber-optic temperature sensor. In other words, the sensor information comprises a plurality of temperature values, one temperature value for each interval. For example, the plurality of intervals may be equidistant intervals (e.g., the aforementioned one-meter intervals), e.g., defined by the fiber-optic temperature sensor 20. Alternatively, the plurality of intervals may be custom intervals that are tailored to the geometry of the cells of the multi-cell electrolyzer and the pattern used for arranging the fiber-optic cable 25 at (or in) the cells.

These temperature values can now be used to calculate the temperatures for the individual cells. For this purpose, information on which temperature value is taken at which cell of the electrolyzer may be used. In the following, this information is denoted a mapping between the intervals of the fiber-optic cable and the cells of the multi-cell electrolyzer. For example, as further shown in Fig. 1a, the method may comprise mapping 130 the plurality of intervals to the cells of the multi-cell electrolyzer. For example, each of the intervals (or a subset of the intervals, in case an interval is between two cells or not arranged at a cell) may be mapped to one of the cells. Accordingly, each cell may have at least one (preferably multiple) interval mapped 130 to it, which can then be used to calculate the temperature or temperatures of the cell. Using the mapping, a selection may be performed as to which temperature value is used to calculate the at least one temperature of a cell. In other words, the method may comprise selecting 140, for each cell of the multi-cell electrolyzer, one or more temperature values based on the mapping of the plurality of intervals to the cells of the multi-cell electrolyzer. The selected temperature values may be used to calculate the at least one temperature of the cell. In other words, the method may comprise calculating 150 the at least one temperature for a cell based on the one or more temperature values selected for the cell. For example, in some cases, a single temperature may be calculated for each cell based on multiple intervals, and thus temperature values, mapped to the cell, e.g., using an average or median of the temperature values. Alternatively, multiple temperatures may be calculated for each cells based on multiple intervals, and thus temperature values, mapped to the cell. Preferably, to detect flameless fires as different sections of the cells, multiple temperatures may be calculated per cell.

The mapping between the intervals and the cells depends on how the fiber-optic cable is arranged at or in the respective cells. In general, two general placement options may be distinguished - at the outside of the cells (e.g., attached to the hull or outer surface, or between the cells and the insulation), or integrated into the cells. For example, the fiber-optic cable may be attached to a hull or outer surface of the cells of the multi-cell electrolyzer. This approach is more suitable for later installations at existing electrolyzers or for use with third-party electrolyzers. Alternatively, the fiber-optic cable may be integrated into the cells, cell walls, heating pipes or cooling pipes of the multi-cell electrolyzer. This requires more effort. However, due to the closer proximity, the measurements may be more exact than measurements from outside the cells. In any case, the fiber-optic cable may cover multiple cells of the multi-cell electrolyzer. For example, a single fiber-optic cable may suffice for measuring the temperature at all of the cells of the multi-cell electrolyzer. Alternatively, multiple fiber-optic cables may be used, with the plurality of intervals extending through the multiple fiber-optic cables. With respect to the mapping between intervals and cells, a complexity may be slightly increased in this case.

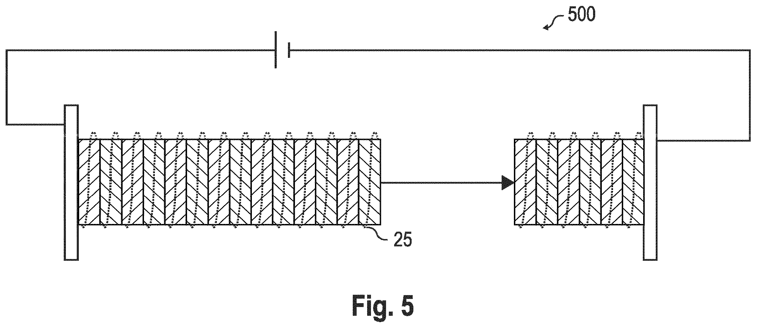

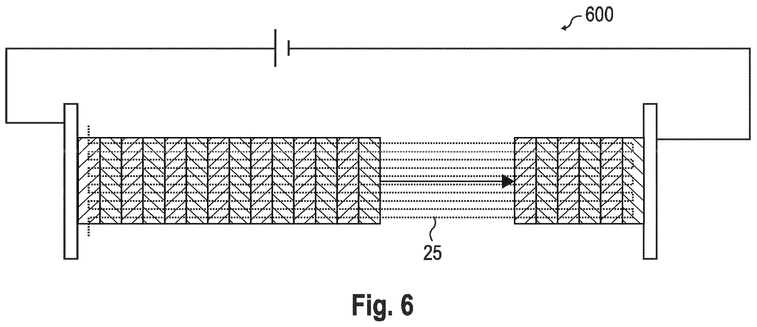

The mapping between intervals and cells depends on the geometry of the electrolysis cells and on the pattern being used for arranging the fiber-optic cable at or in the cells. In Figs. 5 and 6, two options for arranging the fiber-optic cable are shown. In Fig. 5, the fiber-optic cable is shown encircling the cells of the electrolyzer. In other words, the fiber-optic cable may be arranged in a pattern encircling the respective cells successively at an outer perimeter of the cells (e.g., between the cell walls and the insulation). For example, as shown in Fig. 1b, the cells of the electrolyzer may be arranged in a horizontal stack (or alternatively, in a vertical stack). The fiber-optic cable may be arranged in a pattern in which the fiber-optic cable subsequently encircles the individual cells of the stack, e.g., such that each cell is encircled (e.g., surrounded, enclosed) at least once. In some examples, each cell may be wound multiple times per cell, e.g., in little areas per cell, to determine an average temperature value on different locations per cell, or to determine a two-dimensional temperature profile of the cell. For example, as shown in Fig. 1c, a spiral pattern or snail pattern may be used (e.g., with mostly straight lines, as shown in Fig. 1c, or with mostly curves (not shown). As shown in Fig. 1c, the spiral pattern or snail pattern may be repeated multiple times per cell, with the same (or a similar pattern) being used for the other cells as well. Alternatively, or additionally, as shown in Fig. 1d, a serpentine pattern/zig-zag pattern may be repeated multiple times per cell, with the same (or a similar pattern) being used for the other cells as well. For example, in case the diameter of an electrolyzer stack is less then, for example, 1 meter (e.g., less than the measurement accuracy of the fiber-optic temperature sensor) or if the temperature of different areas on the outside of the electrolyzer needs to be measured, a wiring may be applied, where, for example, one part of the individual electrolyzer cell is circled, surrounded or covered a few times (by zig-zagging up and down over e.g. 20 cm as shown in Fig. 1d, or by using a spiral/snail pattern as shown in Fig. 1c) before moving to the next spot on the same cell further on the outer wall. In more general terms, the fiber-optic cable is arranged in a pattern (i.e., the pattern encircling the cells, or a serpentine pattern that is shown in Fig. 6), that comprises a sub-pattern, such as the spiral/snail sub-pattern or the serpentine/zig-zag sub-pattern, that is repeated multiple times within the pattern. Each of the sub-patterns may be arranged at exactly one of the cells (i.e., a sub-pattern might not cover multiple cells). Each cell may be covered by multiple repetitions of the sub-pattern, e.g., by a sequence of sub-patterns being repeated along a perimeter of the respective cell. The mapping between intervals and cells may then be based on this circular or combined circular and repeated sub-pattern pattern, e.g., based on knowledge of which interval is arranged at which cell of the electrolyzer. This may be calculated using a three-dimensional computer-aided design drawing or be determined manually using external markings on the fiber-optic cable.

Alternatively, a woven or serpentine pattern may be used, as shown in Fig. 6. In other words, the fiber-optic cable may be arranged in a serpentine pattern, such that the optical cable repeatedly extends along a sequence of cells of the multi-cell electrolyzer, turns back, extends back along the sequence of cells in reverse direction, and turns back again to extend along the sequence of cells again. Using the serpentine pattern, the optical cable passes by each cell multiple times. Depending on the size of the cells, and size of the intervals, every time (or a subset of times) the fiber-optic cable passes a cell, a temperature value may be mapped to the cell. Similar to the examples shown in connection with the circular pattern, the serpentine/woven pattern may be combined with a smaller spiral/snail pattern or smaller serpentine/zig-zag pattern, to cover one part of the individual electrolyzer cell multiple times. Again, the mapping between intervals and cells may then be based on this serpentine or woven pattern, e.g., based on knowledge of which interval is arranged at which cell of the electrolyzer. This may be calculated using a three-dimensional computer-aided design drawing or be determined manually using external markings on the fiber-optic cable.

As outlined in connection with the circular pattern, in some examples, multiple temperature values may be obtained for each cell, e.g., using the plurality of sub-patterns, such that a two-dimensional temperature profile of the respective cells can be created. For example, the act of calculating the at least one temperature may comprise creating a two-dimensional temperature profile of the individual cells based on the temperature values and based on the mapping between the plurality of intervals and the cells of the multi-cell electrolyzer. In this case, the mapping between the plurality of intervals and the plurality of cells may comprise a mapping between the plurality of intervals and a plurality of points on each cell of the electrolyzer, e.g., a plurality of points of a two-dimensional grid of points of each cell of the electrolyzer.

While the present description primarily relates to hydrogen electrolyzers and chloralkali electrolyzers, the proposed concept is not limited to a specific type of electrolyzers. For example, the proposed concept may be used for different types of (hydrogen) electrolyzers, such as a PEM (Proton Exchange Membrane) electrolyzer, an alkaline electrolyzer, a solid oxide electrolysis-based electrolyzer, or an anion exchange membrane water electrolysis-based electrolyzer. The proposed concept applies to various types of electrolyzers, including electrolyzers with unipolar cells and electrolyzers with bipolar cells, as well as electrolyzers where the cells are arranged in a series configuration and electrolyzers where the cells are arranged in parallel, e.g., in a parallel stack. A unipolar electrolyzer, also known as a "tank-type" electrolyzer, uses porous separators (e.g., membranes) to keep positive and negative electrodes separate. These electrodes are linked together in parallel and are placed in a single electrolyte bath to form a cell. By connecting the cells in series, a multi-cell electrolyzer can be created. Bipolar electrolyzers use a metal sheet, or bipole, to connect adjacent cells in series. For example, the negative electrode electrocatalyst may be coated on one side of the bipole while the positive electrode electrocatalyst of the next cell may be coated on the other side. In the case of bipolar cells, the total voltage is the combined cell voltages, which results in a module that operates at a higher voltage and lower current than the unipolar, tank-type design. To form a large, multi-cell electrolyzer, multiple modules (each comprising multiple cells) are connected in parallel to increase the current. In general, the electrolyzer is a device that uses electricity to drive an otherwise non-spontaneous chemical reaction. In the present context, the electrolyzer may be a device to split compounds, such as water, into their constituent elements, such as hydrogen and oxygen, through electrolysis.

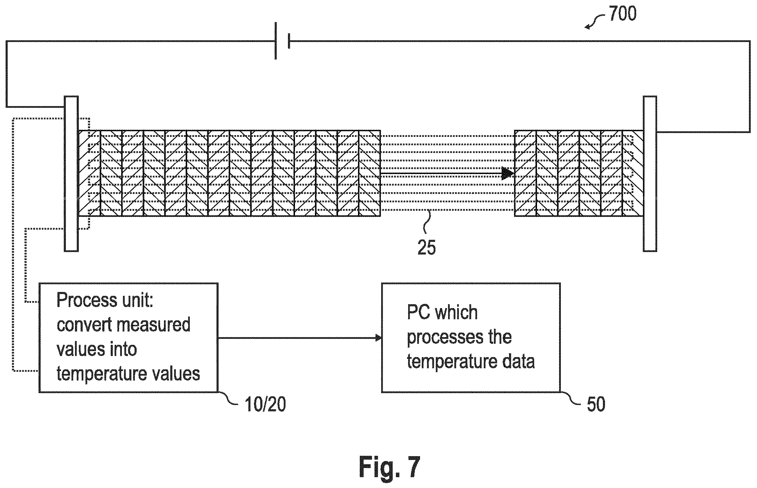

The calculated cell-specific temperatures may then be processed by the apparatus 10 or another processing entity 50, e.g., to raise alarms in case of abnormalities, or to evaluate degradation of the cells over time. For example, in connection with Fig. 7, eight models are introduced that can be used to process the temperature data, and optionally also individual cell voltages and the stack current. In the following, some examples of such processing are given. For example, the apparatus 10 or the processing entity 50 may be configured to compare the temperature of each cell to the temperature of the other cells or to the temperature of one or more reference cells. Cells with a higher or lower temperature compared to other cells may be considered an anomaly if the difference is more than a specified difference (in percent). Additionally, or alternatively, the apparatus 10 or the processing entity 50 may be configured to monitor the temperature of each cell over time. Additionally, or alternatively, the apparatus 10 or the processing entity 50 may be configured to predict the cell temperatures of the individual cells (e.g., using the cell voltage and stack current), and to compare the measured temperatures of the individual cells with the predicted temperatures. To detect H₂ (hydrogen) leakage (and possible flameless fire, which is invisible), any measured high temperature spike (e.g., compared to a previous temperature of the same cell, compared to the other/reference cells, or compared to the predicted temperature) may be considered an H₂ fire, and an alarm may be raised. In other words, analysis may be done to capture any temperature spikes which might indicate a fire caused by (hydrogen) leakage.

The interface circuitry 12 may correspond to one or more inputs and/or outputs for receiving and/or transmitting information, which may be in digital (bit) values according to a specified code, within a module, between modules or between modules of different entities. For example, the interface circuitry 12 may comprise interface circuitry configured to receive and/or transmit information.

For example, the processing circuitry 14 may be implemented using one or more processing units, one or more processing devices, any means for processing, such as a processor, a computer or a programmable hardware component being operable with accordingly adapted software. In other words, the described function of the processing circuitry 14 may as well be implemented in software, which is then executed on one or more programmable hardware components. Such hardware components may comprise a general-purpose processor, a Digital Signal Processor (DSP), a micro-controller, etc.

For example, the storage circuitry 16 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system and of the method, apparatus, and computer system for determining the measured temperature are mentioned in connection with the proposed concept or one or more examples described above or below (e.g., Fig. 2 to 7). The system and the method, apparatus, and computer system for determining the measured temperature may comprise one or more additional optional features corresponding to one or more aspects of the proposed concept, or one or more examples described above or below.

Various examples of the present disclosure relate to the area of electrolyzer monitoring, such as chloralkali or hydrogen electrolyzer monitoring, of various types, and in particular individual electrolyzer cell temperature monitoring. Note that the proposed concept is not limited to a particular type of electrolyzer.

In general, three measurements are of interest when monitoring multi-cell electrolyzers - the stack current, the voltage of the individual cells, and the temperature of the individual cells. For example, the following hardware may be used to capture such process-related data (current, individual cell voltage and outer individual cell temperature). For example, current measurement may be performed via the local control system (typically, for each electrolyzer, the current is measured/ controlled by the control system). In addition, a cell voltage measurement system which accurately measures individual cell voltage may be used. Fig. 2 shows a schematic diagram of a measurement of the voltage of the individual cells and of the stack current. In Fig. 2, a simplified drawing of an electrolyzer 200 is shown, with a positive bus bar 210, a negative bus bar 220, and up to 150 cells (or elements) each comprising a cathode 230 and an anode 235 between the positive and negative bus bar. In the example shown in Fig. 2, 560V DC are provided by a rectiformer as potential between the positive and negative bus bar. Current measurement is performed by a current measurement entity 240, and voltage measurement is performed by a voltage measurement entity 250. The measured voltages, which are measured at the cathode 230 and anode 235 of each cell, are used to calculate the individual cell voltages, which correspond to the potential between the voltages measured at the cathode and anode of a cell.

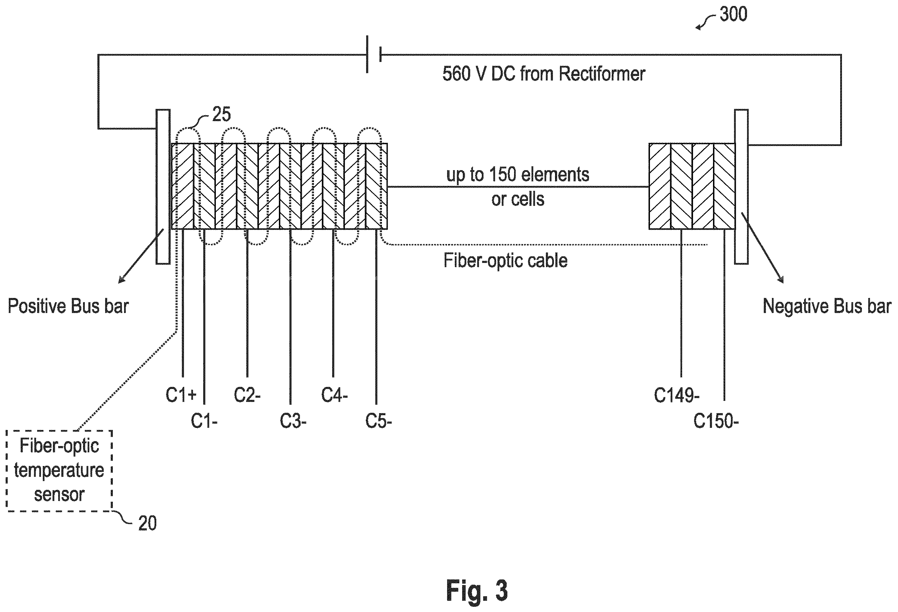

Finally, as the focus of the present application, a temperature measuring device based on optic fiber temperature measurement is used, which is shown in Fig. 3. Fig. 3 shows a schematic diagram of an example of a measurement of a temperature of individual electrolyzer cells. Fig. 3 shows an electrolyzer 300, which may be implemented similar to the electrolyzer 200 shown in Fig. 2. A fiber-optic temperature sensor 20 is used, together with a fiber-optic cable, to measure the temperature at the individual cells. For example, this optic fiber temperature measurement may be used to measure the outer surface temperature of the electrolyzer with sufficient accuracy. Optionally, the fiber-optic temperature measurement may be used to perform internal temperature measurements. However, integration of the fiber-optic cable inside the cells (or inside the cell walls, cooling or heating pipes etc.) may be complex. As an alternative to using an optic fiber-based temperature measurement device, and outside the scope of the present set of claims, an infrared camera may be used.

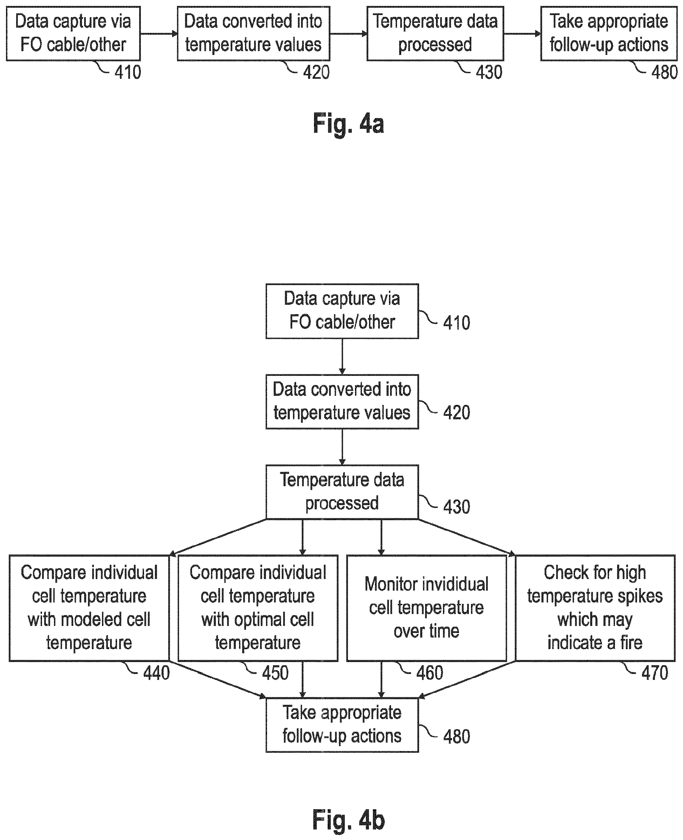

In Figs. 4a and 4b, examples are given on how the temperatures of the individual cells are measured, and how the temperatures may then be processed, e.g., to raise alarms. Figs. 4a and 4b show flow charts of examples of flows of measurement and processing of temperatures of cells of a multi-cell electrolyzer. In the flow, data capture 410 (of the temperature values) is performed via a fiber-optic (FO) cable (or other means). The data is then converted 420 into temperature values, and subsequently processed 430. Processing of the temperature values is shown in more detail in Fig. 4b. For example, as shown in block 440, individual cell temperatures may be compared with the modeled cell temperature. Additionally, or alternatively, as shown in block 450, individual cell temperatures may be compared with an optimal cell temperature. Additionally, or alternatively, as shown in block 460, the individual cell temperatures may be monitored over time. Additionally, or alternatively, as shown in block 470, the temperatures may be checked for high temperature spikes, which may indicate a fire. Finally, appropriate follow-up actions may be taken 480.

The fiber-optic cable may be placed at various positions at the cells of the multi-cell electrolyzer. In general, there is no limitation how fiber optic is attached. For example, the fiber-optic cable can be attached to the outer surface of the electrolyzer, between the electrolyzer and an isolation layer, or if electrolyzer builder agrees, be integrated into the cell itself as well. The method of attachment may vary. In the following, two approaches are shown as non-limiting example. In Fig. 5, the fiber-optic cable encircles the electrolyzer in such way that every cell is fully covered once or multiple times. Fig. 5 shows a schematic diagram of an example of electrolyzer cells of an electrolyzer 500 encircled by a fiber-optic cable 25. Alternatively, a more 'woven' pattern, either horizontally or vertically, may be used, as shown in Fig. 6. Fig. 6 shows a schematic diagram of an example of electrolyzer cells of an electrolyzer 600 with a woven fiber-optic cable 25.

The fiber-optic cable temperature measurement system measures the temperature on distinct distances (e.g., intervals) within the cable. For example, a 6 km cable may measure the temperature at one-meter intervals (e.g., every meter). It is therefore important to know which measurement point is located where. The above-referenced attachment methods, shown in Figs. 5 and 6, give the user the option to locate the cable and its measurement points on the desired locations of each cell.

The measurement data is collected by a processing unit to which the fiber-optic cable or fiber-optic temperature sensor is connected. The resulting sensor information provided by the fiber-optic temperature sensor is then processed. Fig. 7 shows a schematic diagram of an example of a data processing system. The system comprises a process unit 10/20 (which may or may not include the fiber-optic temperature sensor that uses the fiber-optic cable 25) to convert the measured values into temperature values, and another processing entity 50, such as a personal computer or server, to process the temperature data, e.g., according to the models described in the following. For example, as shown in Fig. 7, the data from the processing unit 10/20 may be sent through to the processing entity (e.g., PC) 50 with analysis software for further processing. Refer to figure 3. This processing software may analyze the individual cell temperatures and, if available, compare this to a predicted/calculated cell temperature. In practice, the cell temperature may be estimated based on cell voltage and current input data (e.g., as obtained by the respective measurement entities shown in Fig. 2). In case of anomalies, these may be presented to a user. Analysis may also be done to capture any temperature spikes which might indicate a fire caused by (hydrogen) leakage.

The information acquired by the temperature measurement can be combined with individual cell voltage measurements and stack current. A mathematical model with individual cell voltage and stack current as inputs can be created. This model may be used to predict, among others, the individual cell temperature. Deviations between the model and measured temperature values may be flagged as anomaly for further investigation.

The captured data may be received by a monitoring server, such as the processing entity 50, on which the electrolyzer performance monitoring system runs. Captured data may be analyzed via one or more of the following models. In a first model, the individual cell voltage may be compared with each other. An alarm may be raised for cells with larger deviations. In a second model, at startup, shutdown or load changes, the dynamic behavior of individual cells may be monitored. The time to reach the new steady state gives an indication of overall cell performance. Bad performance likely relates to membrane issues. In a third model, an energy balance may be used to predict cell temperature. This is compared with the measured cell outer cell temperature. An alarm may be raised in case of anomalies. In a fourth model, the temperatures measured of each individual cell may be compared to each other. Cells with a higher or lower temperature compared to other cells may be considered an anomaly if the difference is more than a specified difference (in percent). In a fifth model, to detect H₂ (hydrogen) leakage (and possible flameless fire, which is invisible), any measured high temperature spike may be considered an H₂ fire, and an alarm may be raised. In a sixth model, degradation over time, compared to the initial model setup, may be analyzed and an alarm may be raised. In a seventh model, a quick drop in individual cell voltage indicates a membrane issue and an alarm may be raised in combination with an increase in cell temperature. In an eight model, a reference behavior over time may be determined (including start, continuous operation and stop) based on a set of (one or more) reference cells. Each cell behavior may be compared (as function of current) to this reference model.

Some aspects of the present disclosure relate to individual cell temperature measurement using optical fiber attached to or in each cell. For example, some of the above models (e.g., fourth and the fifth model) may be used to process the individual cell temperatures. In addition, one or more additional models may be used. The temperature measurement may be supplemented with voltage and current measurement, for example. For example, the aspects related to temperature measurement may be implemented by individual cell temperature measurement by means of a fiber-optic cable or other method. A processing unit, such as the apparatus 10 of Fig. 1b, may be used to convert the measured temperature into a format that can be used to compare individual cell temperatures to, for example, modeled temperatures, optimal temperatures etc. In addition to the above, a processing unit to detect flames and send out an alarm based on detected temperature spikes may be used.

Some aspects of the present disclosure relate to a processing of individual cell voltage and individual cell temperature with (optional) stack current measurement. This processing may be done according to one or more of the above models. For the processing, a camera or robotic measurement may be used for temperature measurement instead of fiber-optic measurement.

There are other ways to measure outer cell temperature, for example via a camera measuring surface temperature. As a camera typically has a limited viewing angle either multiple cameras or a camera with build in movement or rotation mechanism may be required. The data captured by a camera is in a different format compared to a fiber-optic cable. For example, the exact position of a particular measurement point may require some data processing to be determined exactly. Moreover, the measurement may contain much more data, which may be fed into smart algorithms detecting variations in temperature in much more detail. Such details may have to be processed to be able to compare this to e.g., calculated values. To detect hydrogen fires, such cameras may be required to have the right properties to do so.

The measurement data is collected by a processing unit to which the fiber-optic temperature sensor is connected. The data from the processing unit may be sent through to a computer or other processing unit with analysis software for further processing, as shown in Fig. 7. This processing software may analyze individual cell temperature and when available compare this to calculated cell temperature. In practice, the cell temperature may be estimated based on cell voltage and current input data. In case of anomalies these are presented to the user.

When modelling is used to predict the cell temperature, a validation can be made between model and individual cell temperature and monitored over time. Deviations, which may indicate cell deterioration, or which show undesired operating temperatures, can now be monitored online, and suitable follow up action can be taken. In case cell temperature is not modelled, the measured cell temperature can still be used to improve or optimize cell performance. Moreover, cell temperature can be monitored overtime. Changes between individual cell temperature are an indication of cell problems and can be flagged for follow-up action. In case of leakage, a flameless fire may occur. Temperature spikes will be measured in such case. An alarm can be generated, e.g., to shut down the electrolyzer, and inform authorities to take the required actions.

More details and aspects of the particular individual electrolyzer cell temperature monitoring are mentioned in connection with the proposed concept, or one or more examples described above or below (e.g., Fig. 1a to 1b). The particular individual electrolyzer cell temperature monitoring may comprise one or more additional optional features corresponding to one or more aspects of the proposed concept, or one or more examples described above or below.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

## Claims

1. A method for determining a measured temperature of a multi-cell electrolyzer (100), the method comprising:
generating (110), by a fiber-optic temperature sensor (20), sensor information, using a fiber-optic cable (25) arranged at cells of the multi-cell electrolyzer (100), wherein the fiber-optic cable (25) is attached to a hull or outer surface of the cells of the multi-cell electrolyzer;
obtaining (120) the sensor information of the fiber-optic temperature sensor (20), wherein the sensor information comprises temperature values measured at a plurality of intervals of the fiber-optic cable (25) used by the fiber-optic temperature sensor (20); and
calculating (150), for the individual cells of the multi-cell electrolyzer (100), at least one temperature of the respective cell based on the temperature values measured at the plurality of intervals.

2. The method according to claim 1, wherein the method comprises mapping (130) the plurality of intervals to the cells of the multi-cell electrolyzer (100), selecting (140), for the respective cells of the multi-cell electrolyzer (100), one or more temperature values based on the mapping of the plurality of intervals to the cells of the multi-cell electrolyzer (100), and calculating (150) the at least one temperature for a cell based on the one or more temperature values selected for the cell.

3. The method according to one of the claims 1 or 2, wherein the fiber-optic cable (25) covers multiple cells of the multi-cell electrolyzer.

4. The method according to one of the claims 1 to 3, wherein the fiber-optic cable (25) is arranged in a pattern encircling the respective cells successively at an outer perimeter of the cells, or wherein the fiber-optic cable (25) is arranged in a serpentine pattern, such that the optical cable repeatedly extends along a sequence of cells of the multi-cell electrolyzer, turns back, extends back along the sequence of cells in reverse direction, and turns back again to extend along the sequence of cells again.

5. The method according to any one of the previous claims, wherein the fiber-optic cable (25) extends over multiple kilometers and the fiber-optic temperature sensor (20) provides respective measurements in one-meter increments.

6. A system comprising:
a multi-cell electrolyzer (100); and
an apparatus (10) for determining a measured temperature of the multi-cell electrolyzer (100), the apparatus comprising:
interface circuitry for obtaining sensor information of a fiber-optic temperature sensor (20); and
processing circuitry to perform the method according to one of the previous claims;
the system further comprising:
the fiber-optic temperature sensor (20) with a fiber-optic cable (25), wherein the fiber-optic cable (25) is attached to a hull or outer surface of the cells of the multi-cell electrolyzer (100),
wherein the fiber-optic temperature sensor (20) is configured to generate, using the fiber-optic cable, sensor information, and to provide the sensor information to the apparatus.

7. The system according to claim 6, wherein the fiber-optic cable (25) covers multiple cells of the multi-cell electrolyzer.

8. The system according to one of the claims 6 or 7 wherein the fiber-optic cable (25) is arranged in a circular pattern encircling the respective cells successively at an outer perimeter of the cells, or wherein the fiber-optic cable (25) is arranged in a serpentine pattern, such that the optical cable repeatedly extends along a sequence of cells of the multi-cell electrolyzer, turns back, extends back along the sequence of cells in reverse direction, and turns back again to extend along the sequence of cells again.

9. The system according to one of the claims 6 to 8, wherein the fiber-optic temperature sensor (20) is a Raman-scattering-based sensor.

10. The system according to one of the claims 6 to 9, wherein the fiber-optic cable (25) is arranged in a pattern that comprises a sub-pattern, such as a spiral sub-pattern or zig-zag sub-pattern, that is repeated multiple times within the pattern, with each of the sub-patterns being arranged at one of the cells, and with each cell being covered by multiple repetitions of the sub-pattern.

11. The system according to one of the claims 6 to 10, wherein the multi-cell electrolyzer is a hydrogen electrolyzer or a chloralkali electrolyzer.

## Patentansprüche

1. Verfahren zum Bestimmen einer gemessenen Temperatur eines Mehrzellen-Elektrolyseurs (100), wobei das Verfahren folgende Schritte aufweist:
Erzeugen (110), durch einen faseroptischen Temperatursensor (20), von Sensorinformationen unter Verwendung eines faseroptischen Kabels (25), das an Zellen des Mehrzellen-Elektrolyseurs (100) angeordnet ist, wobei das faseroptische Kabel (25) an einer Hülle oder einer Außenoberfläche der Zellen des Mehrzellen-Elektrolyseurs angebracht ist;
Erhalten (120) der Sensorinformationen des faseroptischen Temperatursensors (20), wobei die Sensorinformationen Temperaturwerte aufweisen, die an einer Mehrzahl von Abständen des faseroptischen Kabels (25) gemessen werden, das durch den faseroptischen Temperatursensor (20) verwendet wird; und
Berechnen (150), für die einzelnen Zellen des Mehrzellen-Elektrolyseurs (100), zumindest einer Temperatur der jeweiligen Zelle basierend auf den Temperaturwerten, die an der Mehrzahl von Abständen gemessen werden.

2. Verfahren gemäß Anspruch 1, wobei das Verfahren ein Abbilden (130) der Mehrzahl von Abständen auf die Zellen des Mehrzellen-Elektrolyseurs (100), ein Auswählen (140), für die jeweiligen Zellen des Mehrzellen-Elektrolyseurs (100), eines oder mehrerer Temperaturwerte basierend auf dem Abbilden der Mehrzahl von Abständen auf die Zellen des Mehrzellen-Elektrolyseurs (100), und ein Berechnen (150) der zumindest einen Temperatur für eine Zelle basierend auf dem einen oder den mehreren Temperaturwerten, die für die Zelle ausgewählt werden, aufweist.

3. Verfahren gemäß einem der Ansprüche 1 oder 2, bei dem das faseroptische Kabel (25) mehrere Zellen des Mehrzellen-Elektrolyseurs abdeckt.

4. Verfahren gemäß einem der Ansprüche 1 bis 3, bei dem das faseroptische Kabel (25) in einem Muster angeordnet ist, das die jeweiligen Zellen nacheinander an einem äußeren Umfang der Zellen umgibt, oder bei dem das faseroptische Kabel (25) in einem schlangenförmigen Muster angeordnet ist, derart, dass sich das optische Kabel wiederholt entlang einer Abfolge von Zellen des Mehrzellen-Elektrolyseurs erstreckt, zurückbiegt, sich entlang der Abfolge von Zellen in umgekehrter Richtung zurück erstreckt und sich wieder zurückbiegt, um sich wieder entlang der Abfolge von Zellen zu erstrecken.

5. Verfahren gemäß einem der vorhergehenden Ansprüche, bei dem sich das faseroptische Kabel (25) über mehrere Kilometer erstreckt und der faseroptische Temperatursensor (20) jeweilige Messungen in Ein-Meter-Inkrementen bereitstellt.

6. System, das folgende Merkmale aufweist:
einen Mehrzellen-Elektrolyseur (100); und
eine Vorrichtung (10) zum Bestimmen einer gemessenen Temperatur eines Mehrzellen-Elektrolyseurs (100), wobei die Vorrichtung folgende Merkmale aufweist:
eine Schnittstellenschaltungsanordnung zum Erhalten von Sensorinformationen eines faseroptischen Temperatursensors (20); und
eine Verarbeitungsschaltungsanordnung zum Durchführen des Verfahrens gemäß einem der vorhergehenden Ansprüche;
wobei das System ferner folgendes Merkmal aufweist:
den faseroptischen Temperatursensor (20) mit einem faseroptischen Kabel (25), wobei das faseroptische Kabel (25) an einer Hülle oder einer Außenoberfläche der Zellen des Mehrzellen-Elektrolyseurs (100) angebracht ist, wobei der faseroptische Temperatursensor (20) dazu konfiguriert ist, unter Verwendung des faseroptischen Kabels Sensorinformationen zu erzeugen und die Sensorinformationen an die Vorrichtung bereitzustellen.

7. System gemäß Anspruch 6, bei dem das faseroptische Kabel (25) mehrere Zellen des Mehrzellen-Elektrolyseurs abdeckt.

8. System gemäß einem der Ansprüche 6 oder 7, bei dem das faseroptische Kabel (25) in einem kreisförmigen Muster angeordnet ist, das die jeweiligen Zellen nacheinander an einem äußeren Umfang der Zellen umgibt, oder bei dem das faseroptische Kabel (25) in einem schlangenförmigen Muster angeordnet ist, derart, dass sich das optische Kabel wiederholt entlang einer Abfolge von Zellen des Mehrzellen-Elektrolyseurs erstreckt, zurückbiegt, sich entlang der Abfolge von Zellen in umgekehrter Richtung zurück erstreckt und sich wieder zurückbiegt, um sich wieder entlang der Abfolge von Zellen zu erstrecken.

9. System gemäß einem der Ansprüche 6 bis 8, bei dem der faseroptische Temperatursensor (20) ein auf Raman-Streuung basierender Sensor ist.

10. System gemäß einem der Ansprüche 6 bis 9, bei dem das faseroptische Kabel (25) in einem Muster angeordnet ist, das ein Teilmuster aufweist, wie etwa ein Spiral-Teilmuster oder ein Zickzack-Teilmuster, das innerhalb des Musters mehrere Male wiederholt wird, wobei jedes der Teilmuster an einer der Zellen angeordnet ist und wobei jede Zelle durch mehrere Wiederholungen des Teilmusters abgedeckt ist.

11. System gemäß einem der Ansprüche 6 bis 10, bei dem der Mehrzellen-Elektrolyseur ein Wasserstoff-Elektrolyseur oder ein Chloralkali-Elektrolyseur ist.

## Revendications

1. Procédé pour déterminer une température mesurée d'un électrolyseur à cellules multiples (100), le procédé comprenant :
générer (110), à l'aide d'un capteur de température à fibre optique (20), des informations de capteur, à l'aide d'un câble à fibre optique (25) disposé au niveau des cellules de l'électrolyseur à cellules multiples (100), dans lequel le câble à fibre optique (25) est fixé à une coque ou à une surface extérieure des cellules de l'électrolyseur à cellules multiples ;
obtenir (120) des informations de capteur du capteur de température à fibre optique (20), dans lequel les informations de capteur comprennent les valeurs de température mesurées au niveau d'une pluralité d'intervalles du câble à fibre optique (25) utilisé par le capteur de température à fibre optique (20) ; et
calculer (150), pour les cellules individuelles de l'électrolyseur à cellules multiples (100), au moins une température de la cellule respective sur la base des valeurs de température mesurées au niveau de la pluralité d'intervalles.

2. Procédé selon la revendication 1, dans lequel le procédé comprend mettre en correspondance (130) de la pluralité d'intervalles avec les cellules de l'électrolyseur à cellules multiples (100), sélectionner (140), pour les cellules respectives de l'électrolyseur à cellules multiples (100), d'une ou plusieurs valeurs de température sur la base de la mise en correspondance de la pluralité d'intervalles avec les cellules de l'électrolyseur à cellules multiples (100), et calculer (150) de l'au moins une température pour une cellule sur la base de l'une ou plusieurs valeurs de température sélectionnées pour la cellule.

3. Procédé selon l'une des revendications 1 ou 2, dans lequel le câble à fibre optique (25) recouvre plusieurs cellules de l'électrolyseur à cellules multiples.

4. Procédé selon l'une des revendications 1 à 3, dans lequel le câble à fibre optique (25) est disposé selon un motif encerclant successivement les cellules respectives au niveau d'un périmètre extérieur des cellules, ou dans lequel le câble à fibre optique (25) est disposé selon un motif en serpentin, de sorte que le câble optique se prolonge de manière répétée le long d'une séquence de cellules de l'électrolyseur à cellules multiples, revient en arrière, se prolonge en arrière le long de la séquence de cellules dans la direction inverse, et revient à nouveau en arrière pour se prolonger à nouveau le long de la séquence de cellules.

5. Procédé selon l'une quelconque des revendications précédentes, dans lequel le câble à fibre optique (25) se prolonge sur plusieurs kilomètres et le capteur de température à fibre optique (20) fournit des mesures respectives par incréments d'un mètre.

6. Système, comprenant :
un électrolyseur à cellules multiples (100) ; et
un appareil (10) pour déterminer une température mesurée de l'électrolyseur à cellules multiples (100), l'appareil comprenant :
des circuits d'interface pour obtenir des informations de capteur provenant d'un capteur de température à fibre optique (20) ; et
des circuits de traitement pour mettre en œuvre le procédé selon l'une des revendications précédentes ;
le système comprenant en outre :
le capteur de température à fibre optique (20) avec un câble à fibre optique (25), dans lequel le câble à fibre optique (25) est fixé à une coque ou à une surface extérieure des cellules de l'électrolyseur à cellules multiples (100), dans lequel le capteur de température à fibre optique (20) est configuré pour générer, à l'aide du câble à fibre optique, des informations de capteur et pour fournir les informations de capteur à l'appareil.

7. Système selon la revendication 6, dans lequel le câble à fibre optique (25) recouvre plusieurs cellules de l'électrolyseur à cellules multiples.

8. Système selon l'une des revendications 6 ou 7, dans lequel le câble à fibre optique (25) est disposé selon un motif circulaire encerclant successivement les cellules respectives au niveau d'un périmètre extérieur des cellules, ou dans lequel le câble à fibre optique (25) est disposé selon un motif en serpentin, de sorte que le câble optique se prolonge de manière répétée le long d'une séquence de cellules de l'électrolyseur à cellules multiples, revient en arrière, se prolonge en arrière le long de la séquence de cellules dans la direction inverse, et revient à nouveau en arrière pour se prolonger à nouveau le long de la séquence de cellules.

9. Système selon l'une des revendications 6 à 8, dans lequel le capteur de température à fibre optique (20) est un capteur basé sur la diffusion de Raman.

10. Système selon l'une des revendications 6 à 9, dans lequel le câble à fibre optique (25) est disposé selon un motif qui comprend un sous-motif, tel qu'un sous-motif en spirale ou un sous-motif en zigzag, qui est répété plusieurs fois dans le motif, chacun des sous-motifs étant disposé au niveau de l'une des cellules, et chaque cellule étant recouverte par plusieurs répétitions du sous-motif.

11. Système selon l'une des revendications 6 à 10, dans lequel l'électrolyseur à cellules multiples est un électrolyseur à hydrogène ou un électrolyseur chlore-alcali.
